(19) Europäisches Patentamt
European Patent Office
Office européen des brevets

(11) EP 2 536 223 B1

(12) **EUROPEAN PATENT SPECIFICATION**

(45) Date of publication and mention
of the grant of the patent:
**23.07.2014 Bulletin 2014/30**

(51) Int Cl.:
*H04W 52/24* (2009.01)     *H04W 52/34* (2009.01)
*H04W 72/00* (2009.01)     *H04L 5/00* (2006.01)
*H04W 72/08* (2009.01)     *H04W 72/12* (2009.01)

(21) Application number: **11170113.2**

(22) Date of filing: **16.06.2011**

(54) **A method for scheduling users in a cellular environment for applying Pareto optimal power control, scheduler and wireless communication network**

Verfahren zur Zeitplanung von Benutzern in einer zellulären Umgebung zur Anwendung von Pareto-Optimum-Leistungssteuerung, Zeitplaner und drahtloses Kommunikationsnetzwerk

Procédé de programmation d'utilisateurs dans un environnement cellulaire pour appliquer un contrôle de puissance optimum de Pareto, programmateur et réseau de communication sans fil

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.12.2012 Bulletin 2012/51**

(73) Proprietor: **NTT DoCoMo, Inc.**
**Chiyoda-ku**
**Tokyo 100-6150 (JP)**

(72) Inventors:
• **Burchardt, Harald**
**Edinburgh, EH3 5QN (GB)**
• **Sinanovic, Sinan**
**Edinburgh, EH16 6DN (GB)**
• **Haas, Harald**
**Edinburgh, EH10 5RE (GB)**
• **Auer, Gunther**
**80339 München (DE)**

(74) Representative: **Zimmermann, Tankred Klaus et al**
**Schoppe, Zimmermann, Stöckeler**
**Zinkler & Partner**
**P.O. Box 246**
**82043 Pullach (DE)**

(56) References cited:
• **KOLYUZHNOV D ET AL: "Power Controlled Random Access in Multi-Cell OFDMA Uplink", VEHICULAR TECHNOLOGY CONFERENCE, 2008. VTC 2008-FALL. IEEE 68TH, IEEE, PISCATAWAY, NJ, USA, 21 September 2008 (2008-09-21), pages 1-5, XP031352557, ISBN: 978-1-4244-1721-6**
• **A. Goldsmith: "Wireless Communications", 8 August 2005 (2005-08-08), Cambridge University Press, XP002661650, ISBN: 9780521837163 * page 435 - page 437 * * page 484 - page 486 * * figure 15.9 ***

**Description**

Embodiments of the invention relate to the field of wireless communication networks, more specifically to approaches for joint scheduling and power control in a cellular environment, in particular to the scheduling of users such that Pareto optimal power control (POPC) can be directly applied.

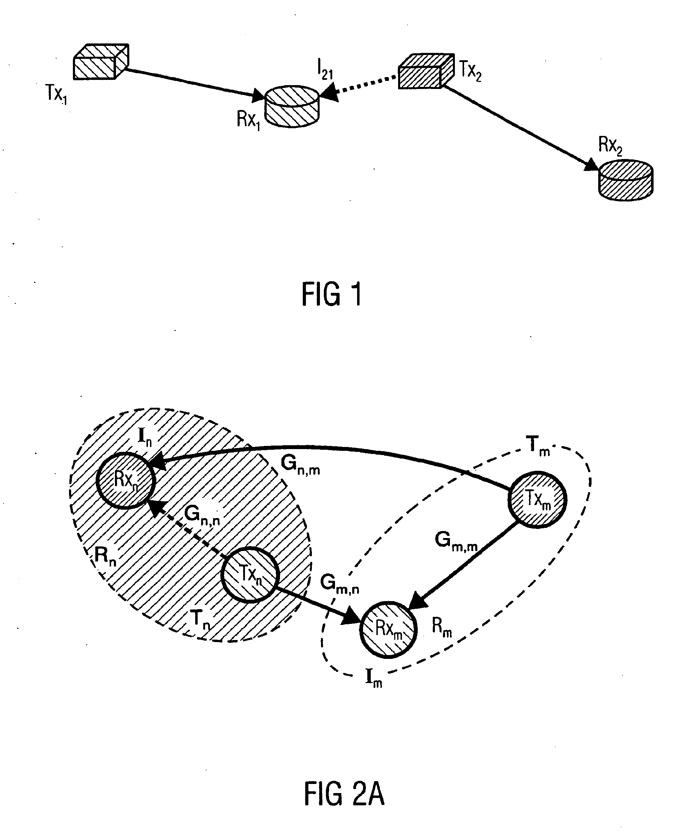

When considering scheduling and tpower control in the uplink of a cellular orthogonal frequency division multiple access (OFDMA) system, uplink power control is an important aspect and is particularly relevant for cellular networks. Fig. 1 is a schematic representation of a portion of such a cellular network comprising two base stations $Rx_1$ and $Rx_2$ receiving on the uplink connection signals from mobile stations or mobile users $Tx_1$ and $Tx_2$. Mobile stations $Tx_1$ communicate with base station $Rx_1$, while mobile station $Tx_2$ communicates with base station $Rx_2$. As shown in Fig. 1, several transmissions occur concurrently so that interference may occur. In the example shown in Fig. 1 the transmission signal transmitted by mobile station $Tx_2$ for communicating with the associated base station $Rx_2$ is also received at the base station $Rx_1$ as an interference transmission $I_{21}$. Interference may severely effect the attainable spectral efficiency in the network. Therefore, for avoiding negative effects on the spectral efficiency scheduling and power control in the uplink connections between the transmitters and the receivers are important aspects. It is noted that the same applies for a downlink connection in such a network in which a transmission occurs from the respective base stations to the associated users, wherein a transmission from a base station may also be received as an interference communication at other mobile stations. When considering Fig. 1, in the down link scenario the base stations would be in the transmitters $Tx_1$, $Tx_2$ and the mobile stations would be the receivers $Rx_1$ and $Rx_2$.

For addressing the problem of interference in wireless communication systems, either in the uplink connection or in the downlink connection, in general, scheduling and power control are separated, i.e. one approach is used for scheduling, and another approach is used for power control. However, this not only generates additional scheduling complexity but also may reduce the optimality of the solution (see, for example, T. ElBatt and A. Eph-remides, "Joint Scheduling and Power Control for Wireless ad hoc Networks," IEEE Transactions on Wireless Communications, vol. 3, no. 1, pp. 74-85, 2004).

Scheduling in OFDMA networks in the uplink and downlink is described in X. Wang, G. B. Giannakis, and Y. Yu, "Channel-Adaptive Optimal OFDMA Scheduling," in Proc. of 41st Annual Conference on Information Sciences and Systems CISS, Baltimore, MD, USA, March 2007, pp. 536-541, where an on-line algorithm based on the water-filling solution is proposed. While this approach delivers an optimal resource block allocation (RB allocation), the throughput fairness among the users is not considered. A computationally efficient power control mechanism is described in D. Kivanc, G. Li, and H. Liu, "Computationally Efficient Bandwidth Allocation and Power Control for OFDMA," IEEE Transactions on Wireless Communications, vol. 2, no. 6, pp. 1150 - 1158, 2003, where the problem of minimizing target power is described. However, the joint subcarrier and power allocation is split into two stages, thus disregarding the dependence between the two. In addition, two greedy allocation algorithms are suggested, so that the fairness consideration is reduced to a minimum rate constraint.

A further known approach is the so-called multi-carrier proportional fair (PF) scheduling, which is described in H. Kim, K. Kim, Y. Han, and S. Yun, "A Proportional Fair Scheduling for Multicarrier Transmission Systems," in Proc. of 60th Vehicular Technology Conference, VTC, vol. 1, Sep. 2004, pp. 409-413. Multi-carrier PF scheduling is based on a generic PF scheduling metric, the maximization of the sum of logarithmic average user rates. Although performance gains over round-robin schedulers are achieved, the high algorithm complexity makes it unsuitable for fourth generation (4G) OFDMA systems. In R. Kwan, C. Leung, and J. Zhang, "Proportional fair multiuser scheduling in LTE," IEEE Signal Processing Letters, vol. 16, no. 6, pp. 461-464, jun 2009 a lower complexity suboptimal proportional fair scheduler (PFS) is described, where subcarriers are scheduled sequentially. However, this causes large sum throughput losses, especially when the user signal-to-interference-plus-noise ratio (SINR) distribution is irregular, which is generally the case in cellular networks. In M. Khedr, I. El-Rube, Y. Hanafy, and H. Abou-Zeid, "Subcarrier opportunistic proportional fair scheduling for OFDMA systems," in Proc. of 4th International Conference on Internet ICI, Tashkent, Sep. 2008, pp. 1-5, subcarrier opportunistic PF scheduling is described, where a subcarrier is assigned to the user with the best weighted response relative to the average response of the other users on the subcarrier. While this scheme provides reasonable capacity-fairness gains, it is only suitable for the downlink and would require to be modified appropriately for the uplink.

The above-described approaches known in the art deal with scheduling, which are separate from power control approaches. For example, power control for OFDM networks involves a fractional power control (FPC) scheme as, for example, described in A. Rao, "Reverse Link Power Control for Managing Inter-Cell Interference in Orthogonal Multiple Access Systems," in Proc of. Vehicular Technology Conference (VTC), Oct. 2007, pp. 1837 - 1841. This scheme offers a slight adaptation to conventional power control to trade off spectral efficiency and cell-edge bit rate. However, many users will not achieve their SINR targets, so that user throughput will suffer. An extension to FPC is described in Z. Li, Y. Wang, and D. Yang, "A Novel Power Control Scheme in OFDMA Uplink," in Proc. of International Conference on Signal Processing (ICSP), 2008, pp. 2880 -2883, where the power control expression takes into account interference caused to neighboring cells. While this achieves a modest capacity increase, the mean level of interference to other cells is not reduced, rather only the variance is. In L. K. Tee, C. van Rensburg, and J.-A. Tsai, "Uplink Power Control for an OFDMA Mobile Cellular System," in Proc. of the Vehicular Technology Conference, Baltimore, MD, Sep./Oct. 2007, on the other hand, a closed-loop power control is described which offers significant gains in the user throughput and transmit power, however these are achieved for very low SINRs only, whereas almost no benefits can be seen in the high SINR range.

Kolyuzhnov, D. et al: "Power Controlled Random Access in Multi-Cell OFDMA Uplink" Vehicular Technology Conference, 2008. VTC 2008-Fall. IEEE 68th, 21. September 2008, pages 1-5 describes the problem of optimum power allocation and link scheduling in cellular systems. In particular, the uplink performance of OFDMA (orthogonal frequency division multiple access) is investigated. By means of heuristic relaxation, the NP-hard problem of joint power control and scheduling is transformed into one of power controlled random access, which is formulated as a convex optimization problem. It is described that a relative increase in the SINR target of 2dB (from 12dB to 14dB) results in a 100%-130% increase in the Pareto optimum power assuming a cellular full frequency reuse system.

It is an object of the invention to provide an improved approach for controlling in a wireless communication system interference through adjusting the transmit power, whilst maximizing the spectral efficiency.

This object is achieved by a method of claim 1, a scheduler of claim 11, and a wireless network of claim 12.

Embodiments of the invention provide a scheduler for a wireless network having a plurality of cells, each including a plurality of users, the scheduler being configured to schedule the users in accordance with embodiments of the invention.

Embodiments of the invention provide a wireless network comprising a plurality of cells, each including a plurality of users, and a scheduler in accordance with embodiments of the invention.

Yet another embodiment of the invention provides a computer program product comprising a program including instructions stored by a computer readable medium, the instructions executing a method in accordance with embodiments of the invention when running the program on a computer.

In accordance with an embodiment scheduling the users may be repeated until all users in the set of candidates have been scheduled.

In accordance with an embodiment, in case there are users which are not part of any combination fulfilling the feasibility condition, scheduling further comprises deactivating for each user one link, adapting a SINR target for each user to maintain system spectral efficiency, adding each combination of users which fulfills a modified feasibility condition to a further set of candidates, and allocating the users until all users in the further set of candidates have been allocated, wherein the allocation starts with a user being part in the fewest combinations. Deactivating, adapting, adding and allocating may be repeated for users not part of any combination fulfilling the modified feasibility condition until all links to users in neighboring cells have been deactivated.

In accordance with an embodiment the method further comprises switching off the links to users in neighboring cells, in case of one or more users in a cell that cannot form a combination fulfilling the feasibility condition. The links may be switched off over a plurality of consecutive time slots, wherein the SINR target of the remaining links is changed for maintaining the system spectral efficiency. The SINR target of the remaining links may be changed as follows:

$$\gamma_{(1),\mathrm{u}p}^{*} = \frac{\prod_{j}^{K}\left(1+\gamma_{j}^{*}\right)}{1+\gamma_{(2),\mathrm{u}p}^{*}} - 1,$$

where $\gamma_{(i),\mathrm{u}p}^{*}$ represents the updated SINR target of the $i^{th}$ remaining link.

In accordance with an embodiment the method may further comprise grouping three cells with coinciding beam patterns to form a cluster shielded from neighboring sectors' interference, applying the scheduling the these three cells, and tessellating the clusters over the cell environment, thereby applying the scheduling separately to each cluster.

In accordance with an embodiment for each combination fulfilling the feasibility condition the method comprises calculating the Pareto optimal power allocation and assigning it to the users.

Embodiments of the invention provide an approach for obtaining an optimal power control for users or mobile stations in a cellular environment using Pareto optimal power control, i.e. adjusting the transmit power such that an achieved SINR of a receiver cannot be increased without reducing the SINR of another receiver. Pareto optimal power control (POPC) is described in A. Goldsmith, Wireless Communications University Press, 2005. In accordance with Pareto scheduling multiple interfering users in neighboring cells are scheduled such that the number of groups of interferers which fulfill a feasibility condition for Pareto optimal power control is maximized. After applying the Pareto optimal power control each user or mobile station in each group will achieve its SINR target with Pareto optimal transmit power.

Thus, embodiments of the invention address the issues of scheduling a power control in the uplink of a cellular OFDM system, however, in accordance with further embodiments, the inventive approach can also be implemented in the downlink.

The above-described known approaches for solving the resource and power allocation problems separate a resource allocation problem and the power location problem in an attempt and solve them separately as an optimization problem. Even most "joint" solutions to the problems provide separate stages for resource, power and rate allocations (see, for example, the publications of T. ElBatt, X. Wang and D. Kivanc mentioned above). Hence, these approaches reduce the optimality of the solutions provided. Contrary thereto, the inventive approach, by combining two allocation stages, allows to schedule users such that the power control stage becomes simply a power assignment procedure, rather than needing to calculate the necessary transmission powers based on an optimal resource allocation. Further, by increasing the applicability of POPC in the network, the users and system target spectral efficiencies will be met with Pareto optimal transmit powers.

In accordance with the embodiments of the invention, Pareto optimal scheduling (POS) is presented, which is a novel scheduling mechanism based on Pareto optimal power control (POPC). Mobile stations (MSs) are scheduled based on path gains and signal-to-interference-plus-noise ratio (SINR) targets such that the conditions for POPC are fulfilled. Further, users are scheduled in such a manner that the number of concurrently transmitting MSs is maximized. In accordance with further embodiments, a stepwise removal (SR) algorithm is provided for a situation where links do not meet the conditions for POPC. In such a case, the links are removed in order for other MSs to achieve their SINR targets, while the targets of the other (remaining) MSs updated to prevent losses in system spectral efficiency caused by the link removals.

Embodiments of the invention are applicable for cellular networks as well as for heterogeneous networks composed of micor, pico and femto-cells.

Embodiments of the invention are advantageous as they provide for a possibility to optimize the interference coordination such that the system spectral efficiency is maximized which allows to more efficiently use the spectral resources and, therefore, to also reduce the costs per transmitted bit. Also, embodiments of the invention are advantageous as the issues of scheduling and power control are solved jointly and simultaneously such that a loss of solution optimality due to a separation of these steps is avoided. In addition, the power usage of the system is minimized due to POPC. Further, all scheduled users (i.e. users that have been assigned RBs and that have not been removed through SR) achieve the SINR targets, and hence also the spectral efficiency target is achieved. Further, an enhanced sum-rate through increase in spatial reuse is achieved as well as a boost in cell-edge user throughput since all users achieve the SINR targets. Also energy efficiency is significantly improved through power control.

Scheduling may take place either in the respective base stations communicating with each other via a backbone network or in an entity at a higher level in the network, for example in the base station of the macro-cell.

Embodiments of the invention will now be described with regard to the accompanying drawings in which:

Fig. 1     is a schematic representation of a portion of a cellular network;

Fig. 2     shows a schematic representation of a communication system, wherein Fig. 2(a) depicts a schematic representation of two transmitters, and wherein Fig. 2(b) and Fig. 2(c) depict the strengths of a receive signal, a noise signal and an interference signal at two receivers;

Fig. 3     shows a schematic representation of a three-cell network (Fig. 3(a)) and the available resource blocks (Fig. 3(b));

Fig. 4     shows an example of a SR algorithm with SINR target updates over multiple time slots;

Fig. 5     shows a three-cell system similar to the one in Fig. 3(a);

Fig. 6     depicts a sectorized cellular network with a three-cell scheduler being tessellated over its cells;

Fig. 7     shows a graph depicting the range of values for c and d in Eq. (4) for which all eigenvalues of F are within the unit circle;

Fig. 8     shows the POS algorithm in accordance with an embodiment of the invention;

Fig. 9     shows a graph of the spectral efficiency results for various power allocation techniques for varying SINR targets and inter-site distances (ISDs); and

Fig. 10    shows a graph of the system power usage results for the various power control techniques.

Pareto optimal scheduling (POS) focuses on scheduling users such that Pareto optimal power control (POPC) is applied in a way that the system spectral efficiency and energy consumption are optimized. The inventive approach relies on POPC described in A. Goldsmith, Wireless Communications University Press, 2005, for which all users achieve the SINR targets and the total transmit power of the mobile stations (MSs) is minimized. In accordance with POPC the transmit power is adjusted such that a certain SINR is achieved at the receiver on each link.

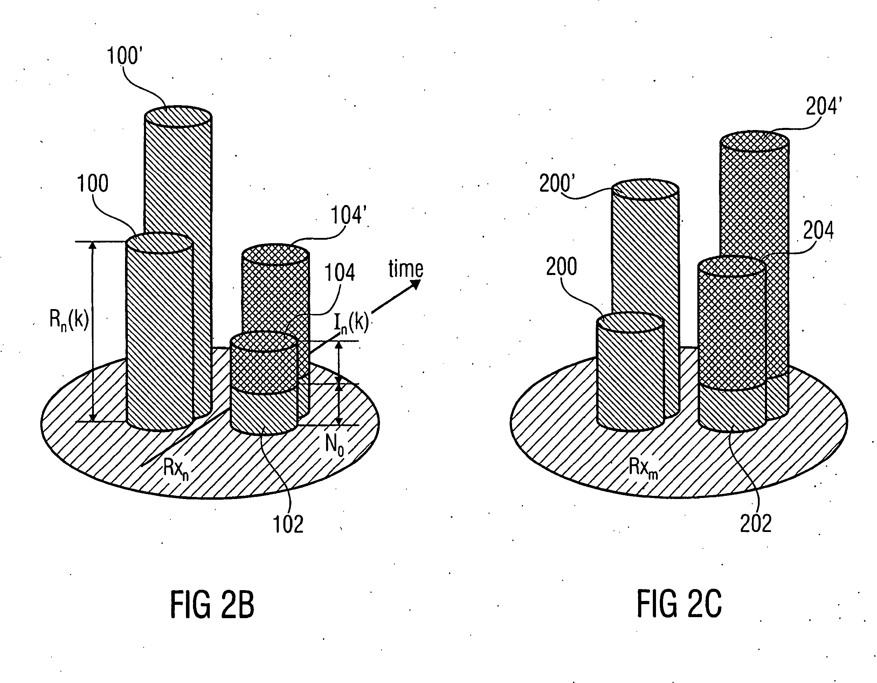

Fig. 2 shows a schematic representation of a communication system. Fig. 2(a) depicts a schematic representation of two transmitters $Tx_n$ and $Tx_m$ transmitting signals. Further, two receivers $Rx_n$ and $Rx_m$ are shown receiving from the transmitters respective signals. In Fig. 2(a) the transmitter $Tx_n$ serves the transmitter $Rx_n$ via a channel having a channel gain $G_{n,n}$. Likewise, the transmitters $Tx_m$ serves the receiver $Rx_m$ via a further channel having a channel gain $G_{m,m}$. However, the respective receivers are also subjected to interference in that receiver $Rx_n$ receives a signal from the transmitter $Tx_m$, via an interference channel having a channel gain $G_{n,m}$. Likewise receiver $Rx_m$ receives a signal from the transmitter $Tx_n$ via an interference channel having a channel gain $G_{m,n}$. The transmit powers of the respective transmitters are denoted as $T_n$ and $T_m$, respectively, and the received power or rather the power level of the signal received at the respective receivers is denoted $R_n$ and $R_m$, respectively. The SINR at receiver $Rx_n$ is calculated as follows:

$$\gamma_n = \frac{R_n}{I_n + N_0}$$

In accordance with G. J. Foschini and Z. Miljanic, "A Simple Distributed Autonomous Power Control Algorithm and Its Convergence," IEEE Transactions on Vehicular Technology, vol. 42, no. 4, pp. 641-646, Nov. 1993, for a Pareto optimum power control the power at a transmitter is updated as follows:

$$T_m(k) = \frac{\Gamma_m}{\gamma_m(k-1)} T_m(k-1)$$

where:

$\Gamma_m$ : SINR target
$\gamma_m(k)$ : achieved SINR

However, increasing the transmit power on one link induces interferences to the other link as is shown in Figs. 2(b) and (c). In Fig. 2 (b) the received power 100 ($R_n(k)$) at a time instance k is indicated. Also the noise signal 102 ($N_0$) and the interference signal 104 (In) at time instance k are shown. In Fig. 2(c) the received power 200 at receiver $Rx_m$ at instance k, the noise signal 202 ($N_0$) and the interference signal 204 at the receiver $Rx_m$ is shown at time instance k. The distance between the transmitter $Tx_n$ and the receiver $Rx_m$ is smaller than a distance between the transmitter $Tx_m$ and the receiver $Rx_n$. The distance between the transceiver $Tx_n$ and the receiver $Rx_n$ is shorter than a distance between the transmitter $Tx_m$ and the receiver $Rx_m$. The power received at receiver $Rx_n$ is higher than the power received at receive $Rx_m$ (see Fig. 2(b) and Fig. 2(c)). The noise remains substantially unchanged. Further, the interference signal at the receiver $Rx_n$ is smaller than the interference signal 204 at the receiver $Rx_m$.

In case it is determined that a desired SINR is not achieved at the receiver $Rx_m$ the transmitter $T_{xm}$ may be controlled to increase its transmit power as is shown at 200' in Fig. 2(c). However, this yields a higher interference signal at the receiver $Rx_n$ as is shown at 104' in Fig. 2(b). Further, in case the transmit power of the transmitter $Tx_n$ is increased as is shown at 100' in Fig. 2(b), for example for obtaining a desired SINR at the receiver $Rx_n$ this also increases the interference at the receiver $Rx_m$ as is shown at 200'. Thus, Pareto optimal power control is a non-trivial task.

In accordance with the inventive approach, users are scheduled in such a manner that each MS only has a single interferer in each neighboring cell (i.e. the same RBs (resource blocks) are assigned to a single MS in each cell) such that POPC can be applied directly to each group of MSs. For allowing POPC to be applied to a group of interfering MSs, the following condition must hold:

$$\mathbf{P}^* = (\mathbf{I} - \mathbf{F})^{-1}\mathbf{u} \qquad iff \quad \rho_F < 1, \tag{1}$$

where P* is the Pareto optimum power vector, I is the identity matrix, u is the vector of noise power scaled by the SINR targets and channel gains, F is the interference matrix, and $\rho_F$ is the Perron-Frobenius (i.e., maximum absolute) eigenvalue of F. If a group of MSs interfering with each other can fulfill the condition in Eq. (1), then POPC is utilized and each MS is allocated in optimum transmit power. To be able to schedule users in this way, the condition set forth in Eq. (1) needs to be formulated such that the network can directly utilize available information, i.e., path gains and SINR targets. After a derivation, the feasibility condition can be formulated as follows:

$$F_{12}F_{21} + F_{13}F_{31} + F_{23}F_{32} + F_{12}F_{23}F_{31} + F_{13}F_{21}F_{32} < 1, \tag{2}$$

where

$$F_{ij} = \frac{\gamma_i^* G_{j,v_i}}{G_{i,v_i}} \qquad \text{are the elements of the interference matrix } \mathbf{F},$$

$\gamma_i^*$ is the target SINR of MS $i$, and

$G_{j,v_i}$ is the path gain between MS $j$ and the BS $v_i$ of MS $i$.

Thus, the feasibility condition is expressed in terms of path gains and SINR targets, and the users can be scheduled accordingly.

To utilize Eq. (2) the scheduler needs to be aware of both the desired link and interfering link gains of the MSs in the system. Each of the MSs can estimate its path gains to its own and neighboring BSs using the reference signals in the downlink, and can report back to the BS on uplink control channels. The BSs in question can then share this information among each other over the network backbone, for example, the X2 interface in LTE. The information may either be passed to a higher architecture level (for example, the Serving Gateway (S-GW)/Mobility Management Entity (MME) in LTE) or to a single nominal BS so that the appropriate MS groups can be calculated according to Eq. (2) and the scheduling commands can be signaled to the individual BSs.

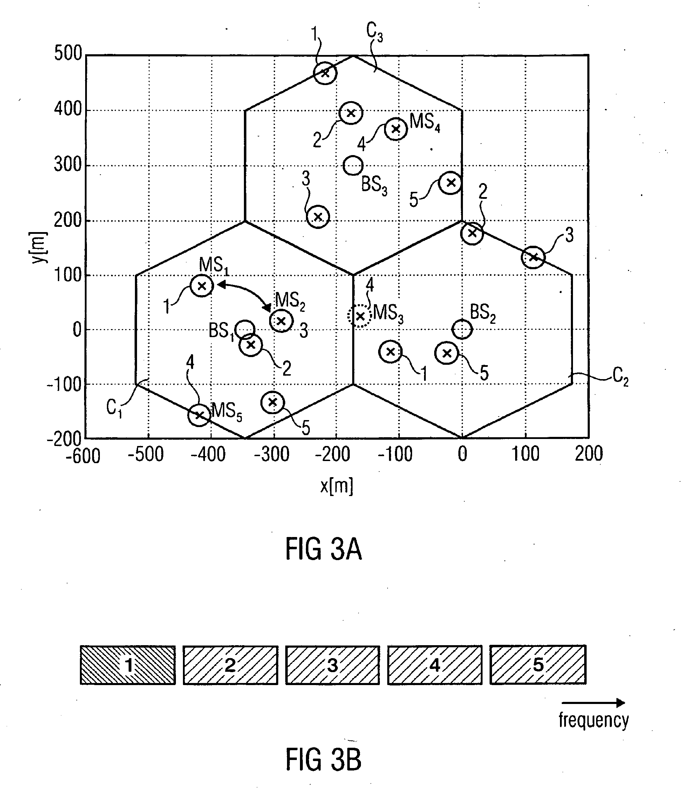

An example for the combination of power control, scheduling and resource partitioning in accordance with embodiments of the invention will be described in the following on the basis of Fig. 3, in which Fig. 3(a) shows a schematic representation of a three-cell network and Fig. 3(b) shows the available resource blocks (RBs), more specifically five different frequencies or frequency bands that may be allocated to the respective users. In Fig. 3(a) three-cells $C_1$ to $C_3$ are shown each comprising a respective base station $BS_1$ to $BS_3$. Each of the cells $C_1$ to $C_3$ comprises five mobile stations. During scheduling appropriate user pairs are determined so that all links may coexist, i.e. a desired SINR target is met. In POS, when there are multiple users per cell (see cells $C_1$ to $C_3$ of Fig. 3(a)), the MSs must be scheduled such that the number of groups of interferers fulfilling the condition (2) is maximized. This is done by iterating through all combinations of MSs in the cells, and allocating the RBs such that the combinations of MSs fulfilling the condition are scheduled as interferers. If it is possible to schedule all users in the system such that for each group of the interferers the condition (2) is fulfilled, then with POPC every user (MS) will achieve its target SINR and the total system power will be minimized.

An example of such a scheduling instance is shown in Fig. 3(a), and in each cell the same resource blocks RBs are assigned to each MS in a group (and, clearly, a different set of RBs is assigned for each group). Then, after POPC is applied, each MS in each group will achieve its SINR target with Pareto optimal transmit power. For example, in Fig. 3(a) in each cell $C_1$ to $C_3$ a resource block is assigned only once, as can be seen from the respective numbers 1 to 5 assigned to the respective mobile stations in the cells $C_1$ to $C_3$.

The above-described scheduling process may comprise swapping the RB assignment between two users in one cell, which may result in a different interference condition in adjacent cells so as to meet the condition (2). For example, in Fig. 3(a) initially resource block 3 might have been assigned to mobile station $MS_1$, and resource block 1 might have been assigned to mobile station $MS_2$. However, this assignment did not fulfill condition (2) so that during the scheduling process in cell $C_1$ the resource blocks 1 and 3 were swapped so that mobile station $MS_1$ has assigned thereto resource block 1 (instead of resource block 3), and mobile station $MS_2$ has assigned thereto resource block 3 instead of resource block 1) so that for the allocation depicted in Fig. 3(a) condition (2) is fulfilled.

However, there may be situations in which, due to the position of some $MS_s$, for example at a cell-edge, these users may not be able to form a group of interferers that satisfies the condition for POPC. In this case, one or more links need to be switched off in order to allow potential interferers to be scheduled and to achieve the desired SINR targets. Fig. 3(a) shows an example for such a link removal or switching off of a link because the group of mobile stations having allocated therewith resource block 4, namely mobile stations $MS_3$ to $MS_5$ do not form a group of interferers that satisfies the above-mentioned feasibility condition for POPC. Thus, in accordance with a stepwise removal (SR) algorithm in accordance with an embodiment of the invention, one or more links of the mobile station $MS_3$ to the base stations $BS_1$ to $BS_3$ are removed and, therefore, in Fig. 3(a) mobile station $MS_3$ is shown with a dotted circle. Removing one or more links for the mobile station allows the other two mobile stations $MS_4$ and $MS_5$ to achieve their SINR targets (updated).

Turning off any link may harm the system spectral efficiency so that in accordance with an embodiment the SINR targets of the interferers will be updated to "cover" the removed spectral efficiency from the excluded link. By this mechanism, POPC can still be applied, with one or multiple links, if needed, removed, so that the spectral efficiency is maintained and that minimum transmit power usage is ensured.

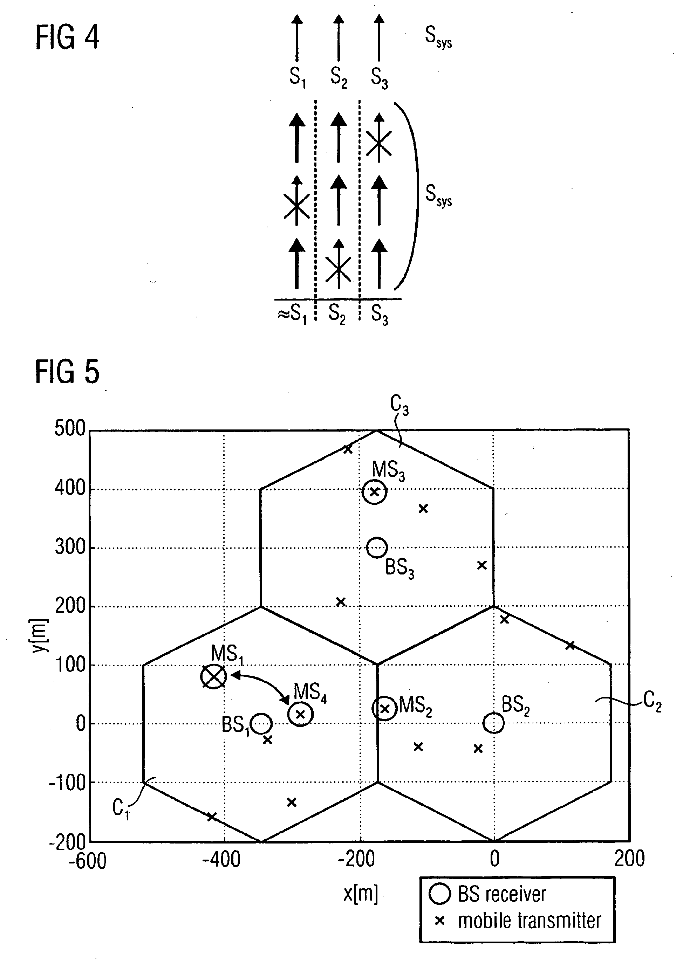

An example of the SR algorithm is shown in Fig. 4 with SINR target updates over multiple time slots. As is shown in Fig. 4, over multiple time slots $S_1$ to $S_3$ for a mobile station each of the three links is removed once, as is shown by the dashed arrow having the 'x'. At the same time, the SINR targets (and consequently the spectral efficiency) of the two remaining links are augmented as is indicated by larger, bold arrows. By this approach, in each time slot and over all time slots (in the example shown over three time slots) the spectral efficiency $S_{sys}$ is maintained. Furthermore, over three time slots each individual MS can achieve its target spectral efficiency, because the two inflated transmissions compensate for the loss of the removed transmission. Hence, both the system and the individual spectral efficiencies are maintained through the SINR target updates in the SR algorithm, while the link removals in each slot allow for scheduling of the other two users.

An example of an algorithm for combined power control, scheduling and resource partitioning in accordance with the embodiments of the invention will now be described with regard to Fig. 5 showing a three-cell system as in Fig. 3(a). The first step of the algorithm is a resource allocation step in which resource blocks are assigned to the respective users. In Fig. 5 the same resource is assigned to mobile stations $MS_1$ to $MS_3$ in the respective cells $C_1$ to $C_3$. In the power control step it is determined as to whether condition (2) is fulfilled for the group of mobile station $MS_1$ to $MS_3$. In case it is determined that $\rho_F \geq 1$, then at least one of the links in the group does not achieve the desired SINR target. It is assumed in Fig. 5 that the links associated with mobile station $MS_1$ are removed and that only then the remaining mobile stations in the group achieve the desired ISINR target, i.e. $\rho_F < 1$. Therefore, Fig. 5 shows mobile station $MS_1$ crossed out. The algorithm then returns to resource allocation step and a new set of mobile stations is selected so that the group now includes mobile station $MS_2$ to $MS_4$.

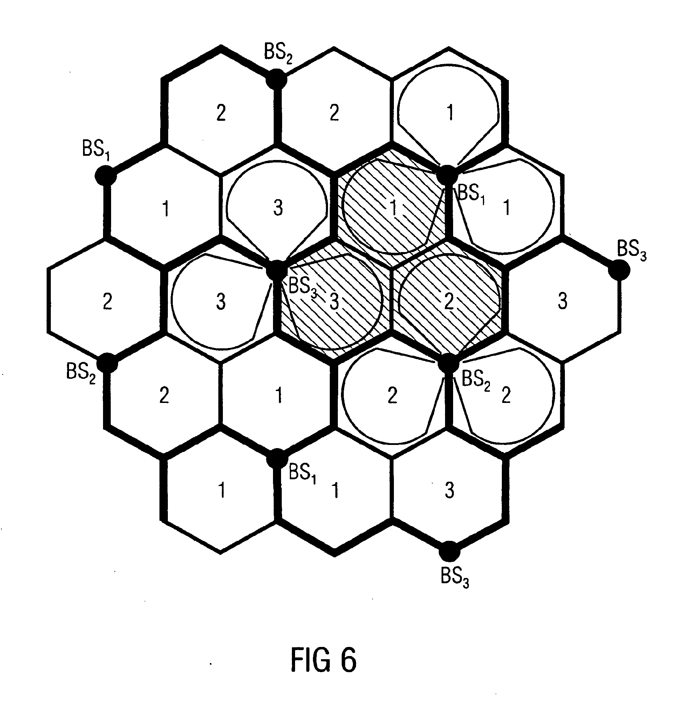

As described above, the POS scheduling approach is for a three-cell system, however, realistic scenarios comprise more than three cells. One option would be to derive the feasibility condition (2) for a larger number of cells and therefore apply the POS approach to a larger network, however, E. Jury, "A simplified stability criterion for linear discrete systems," Proceedings of the IRE, vol. 50, no. 6, pp. 1493-1500, 1962 indicates that the feasibility conditions for even a four-cell scenario are excessively complex so that the just-mentioned extension to larger networks is not practical. In accordance with embodiments of the invention this problem is solved by an approach tessellating the three-cell POS over a network of any dimension. This is described with regard to Fig. 6 depicting a sectorized cellular network where a three-cell scheduler is tessellated over the cells in such a manner that three neighboring sectors/cells with interfering beams are grouped so that POS can be applied. In the sectorized, cellular network of Fig. 6 universal frequency reuse is applied, and the different numbers in the respective cells indicate which BS is serving the cells. By grouping three cells with coinciding beam patterns (see the shaded cells in Fig. 6) POS can be applied to these three cells, and the cluster will be relatively shielded from neighboring sectors' interference due to the nature of the beam pattern. This clustering is then tessellated over the network such that POS can be applied separately in each of these clusters without overly excessive co-channel interference (CCI) from the surrounding cells thereby allowing the MSs to achieve the transmission requirements.

In the following a detailed embodiment of the inventive approach will be described. In Pareto optimal power allocation, given a feasible link allocation, *i.e.,* $\rho_F < 1$, a vector $\mathbf{P^*} = (\mathbf{I} - \mathbf{F})^{-1}\mathbf{u}$ can be found such that all users achieve their SINR requirements with minimal power. This is a highly desirable result which, depending on the locations of the interfering MSs, may not always be feasible. Hence, by scheduling the users purposefully in such a manner as to maximize the number of feasible $\mathbf{F}$ matrices (in principle, there can be as many $\mathbf{F}$ matrices as there are RBs in the system), the system spectral efficiency can be maximized. A scheduler in accordance with embodiments of the invention allowing for this will now be described.

Since for a particular grouping of MSs (on the same RB(s) in different cells) to be feasible pF < 1, it follows the modulus of all eigenvalues $\lambda_i$ of F must also be less than unity, i.e., $|\lambda_i| < 1$, $\forall i = 1,...,K$. In other words, all eigenvalues must lie within the unit circle.

In E. Jury, "A simplified stability criterion for linear discrete systems," Proceedings of the IRE, vol. 50, no. 6, pp. 1493-1500, 1962, a simplified analytic test of stability of linear discrete systems is described. The test also yields the necessary and sufficient conditions for any real polynomial to have all its roots inside the unit circle. Hence, this test can be directly applied to the characteristic function $f_F(\lambda)$ of the matrix $\mathbf{F}$, whose roots are the eigenvalues of $\mathbf{F}$, and thus need to lie within the unit circle. The characteristic function of $\mathbf{F}$, $f_F$, can be expressed as follows:

Given

$$\mathbf{F} = \begin{bmatrix} 0 & F_{12} & F_{13} \\ F_{21} & 0 & F_{23} \\ F_{31} & F_{32} & 0 \end{bmatrix}$$

$$f_{\mathbf{F}_3}(\lambda) = \det(\mathbf{F} - \lambda\mathbf{I}) = 0$$

$$= -\lambda^3 + \lambda(F_{12}F_{21} + F_{13}F_{31} + F_{23}F_{32}) + F_{12}F_{23}F_{31} + F_{13}F_{21}F_{32} \tag{3}$$

$$= \lambda^3 + c\lambda + d \tag{4}$$

Hence

$$c = -F_{12}F_{21} - F_{13}F_{31} - F_{23}F_{32}$$

$$d = -F_{12}F_{23}F_{31} - F_{13}F_{21}F_{32}$$

In E. Jury, "A simplified stability criterion for linear discrete systems," Proceedings of the IRE, vol. 50, no. 6, pp. 1493-1500, 1962, the stability constraints for a polynomial of order $K=3$ are given as:

$$
\begin{aligned}
f(z) \quad &= a_3 z^3 + a_2 z^2 + a_1 z + a_0, \quad a_3 > 0 \\
1) \quad &\quad |a_0| < a_3 \\
2) \quad &\quad a_0^2 - a_3^2 < a_0 a_2 - a_1 a_3 \\
3) \quad &\quad a_0 + a_1 + a_2 + a_3 > 0, a_0 - a_1 + a_2 - a_3 < 0
\end{aligned}
\tag{5}
$$

In E. Jury, "A simplified stability criterion for linear discrete systems," Proceedings of the IRE, vol. 50, no. 6, pp. 1493-1500, 1962, the stability constraints are for a polynomial of degree $n$ to have all its $n$ roots within the unit circle, which is a necessary condition for the stability of linear discrete systems. However, in accordance with the inventive approach the stability of the polynomial is not an issue, rather it is to be ensured that the roots, which are the eigenvalues of $\mathbf{F}$, lie within the unit circle so that $\mathbf{F}$ becomes feasible.

The above conditions can now be applied to the characteristic function $f_{\mathbf{F}_3}(\lambda)$

$$f_{\mathbf{F}_3}(\lambda) \quad = \lambda^3 + c\lambda + d$$

$$a_3 \quad = 1, a_2 = 0, a_1 = c, a_0 = d,$$

1) $\quad |d| < 1$

2) $\quad d^2 - 1 < c \rightarrow c > 1 - d^2$

3) $\quad d + c + 1 > 0 \rightarrow c > -d - 1,$

$$d - c - 1 < 0 \rightarrow c > d - 1 \tag{6}$$

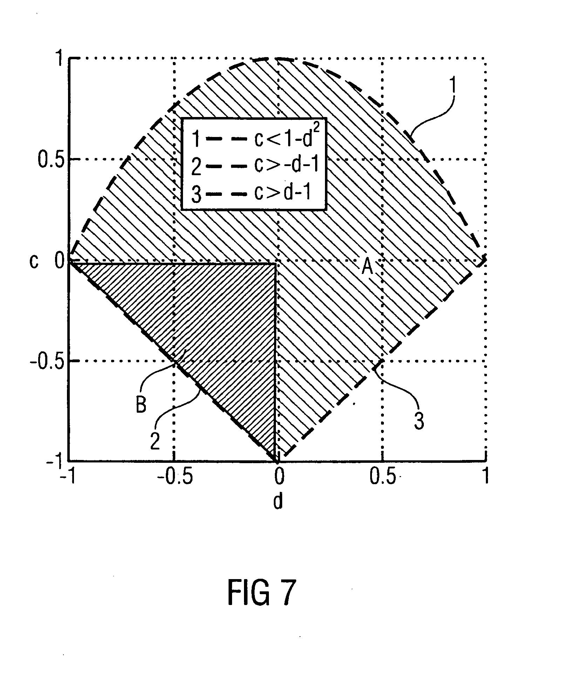

which describes the ranges of c and *d* for which **F** is feasible. These are shown in Fig. 7 by the dotted lines and the enclosed area. In Fig. 7 the enclosed area depicts the range of values for *c* and *d* in Eq. (4) for which all eigenvalues of **F** are within the unit circle. Due to the nature of *c, d < 0*, the area B within the dotted lines 1, 2 and 3 denotes a specific feasibility area. However, since $F_{i,j} > 0$, $\forall_{i,j}$, it is clear that both *c, d < 0*, and hence the feasible area is substantially reduced (from the area A to the area B in Fig. 7), and the constraints are reduced to only a single one, such that the **feasibility condition** becomes:

3) $\quad c > -d - 1$

$$-F_{12}F_{21} - F_{13}F_{31} - F_{23}F_{32} > F_{12}F_{23}F_{31} + F_{13}F_{21}F_{32} - 1$$

**So**, $\rho_F < 1$ **if** :

$$F_{12}F_{21} + F_{13}F_{31} + F_{23}F_{32} + F_{12}F_{23}F_{31} + F_{13}F_{21}F_{32} < 1 \tag{7}$$

So, a group of MSs, one in each cell (in the three-cell scenario), is feasible iff the condition in Eq. (7) is fulfilled. This is dependent on the individual desired and interfering path gains, along with the SINR targets of the users. Therefore, a scheduler may make use of this condition to schedule users such that the number of feasible groups of MSs is maximized, hence also maximizing the spectral efficiency of the system.

In both POPC and the Foschini-Miljanic algorithm (an iterative implementation of POPC and described in G. Foshini, Z. Miljanic, "A Simple Distributed Autonomous Power Control Algorithm and Its Convergence," IEEE Transactions on Vehicular Technology, vol. 42, no. 4, pp. 641-646, Nov. 1993), if $\rho_F \not< 1$ then no solution is available, and hence **P** $\rightarrow 0$ or **P** $\rightarrow (P_{max},...,P_{max})^T$, respectively. In these cases, either none of the links will transmit, or transmit with (most-likely) too much power, and hence these solutions are suboptimal.

To address this problem is to successively remove single links from the group of interfering MSs, until a **F** is achieved with $\rho_F < 1$. At each step, the link is removed that is causing the largest interference to the other users, *i.e.*, the column of **F** with the largest sum (both the column and the corresponding row are removed from **F**). However, turning off one of the links will harm the system spectral efficiency, and hence, in accordance with embodiments, an update function is provided to amend the SINR targets of the remaining links such that the system spectral efficiency does not suffer:

$$\gamma^{\bullet}_{(1),up} = \frac{\prod_{j}^{K}(1 + \gamma^{\bullet}_j)}{1 + \gamma^{\bullet}_{(2),up}} - 1 , \tag{8}$$

where $\gamma^{\bullet}_{(i),up}$ represents the updated SINR target of the *i*th remaining link. Since Eq. (8) has infinite solutions, an additional condition on $\gamma^{\bullet}_{(1),up}$ and $\gamma^{\bullet}_{(2),up}$ such as a power minimization

$$Solve\ (8)\ s.t. \qquad \min\left\{ \gamma_{(1),up}^{*} + \gamma_{(2),up}^{*} \right\}, \qquad (9)$$

or an equal absolute SINR increase

$$Solve\ (8)\ s.t. \qquad \gamma_{(1),up}^{*} - \gamma_{(1)}^{*} = \gamma_{(2),up}^{*} - \gamma_{(2)}^{*}, \qquad (10)$$

is necessary. Finally, when two links have been removed and only a single link remains,

$$\gamma_{(1),up}^{*} = \prod_{j}^{K}\left(1 + \gamma_{j}^{*}\right) - 1 \qquad (11)$$

and **F** = 0, $\rho_F$ = 0, and $\mathbf{P} = \mathbf{u} = \dfrac{n\gamma_{(1),up}^{*}}{G_{1,v_1}}$ .

Through this form of link removal, the system spectral efficiency can be maintained while maximizing the number of transmitting users according to the feasibility constraint $\rho_F$. Furthermore, it prevents the explosion of transmit powers that results from the Foschini-Miljanic algorithm, and the annihilation of links caused by POPC.

In the case that the scheduler is unable to find feasible groups for particular MSs (due to *e.g.*, location at cell-edge), the SR algorithm will turn off one of the links in a group of MSs, resulting in a feasibility matrix **F** of size $K$-1x$K$-1, in the three-cell case 2x2:

$$\mathbf{F} = \begin{bmatrix} 0 & F_{12} \\ F_{21} & 0 \end{bmatrix} \qquad (12)$$

Hence, the characteristic function is given by

$$\begin{aligned} f_{\mathbf{F}_2}(\lambda) &= \det\left(\mathbf{F} - \lambda\mathbf{I}\right) \\ &= \lambda^2 - F_{12}F_{21} = 0 \\ &= \lambda^2 + c \\ c &= -F_{12}F_{21} \end{aligned} \qquad (13)$$

Again from E. Jury, "A simplified stability criterion for linear discrete systems," Proceedings of the IRE, vol. 50, no. 6, pp. 1493-1500, 1962, the stability constraints for a polynomial of order $K$-1=2 are

$$f(z) = a_2 z^2 + a_1 z + a_0, \quad a_2 > 0$$
$$1) \quad |a_0| < a_2 \tag{14}$$
$$2) \quad a_0 + a_1 + a_2 > 0, \quad a_0 - a_1 + a_2 > 0$$

Applying these conditions to the $f_{\mathbf{F}_2}(\lambda)$ yields

$$f_{\mathbf{F}_2}(\lambda) = \lambda^2 + c$$
$$a_2 = 1, a_1 = 0, a_0 = c,$$
$$1) \quad |c| < 1 \tag{15}$$
$$2) \quad c + 1 > 0 \rightarrow 1 > -c,$$

and hence the **feasibility condition** is given by

$$2) \begin{matrix} 1 > -c \\ 1 > F_{12}F_{21} \end{matrix} \quad So, \rho_F < 1 \, if: \quad F_{12}F_{21} < 1 \tag{16}$$

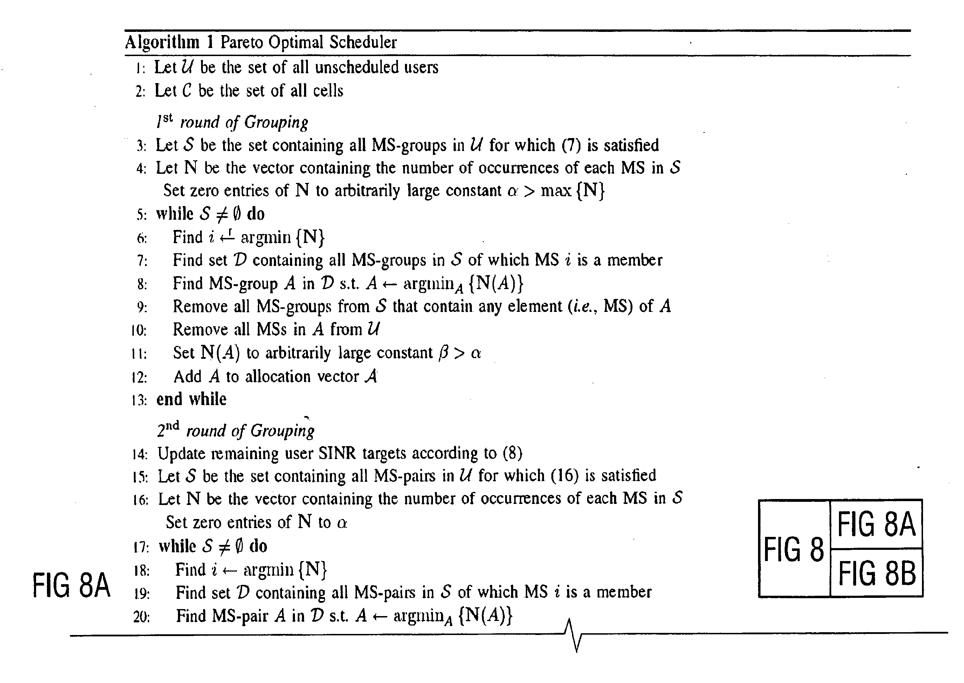

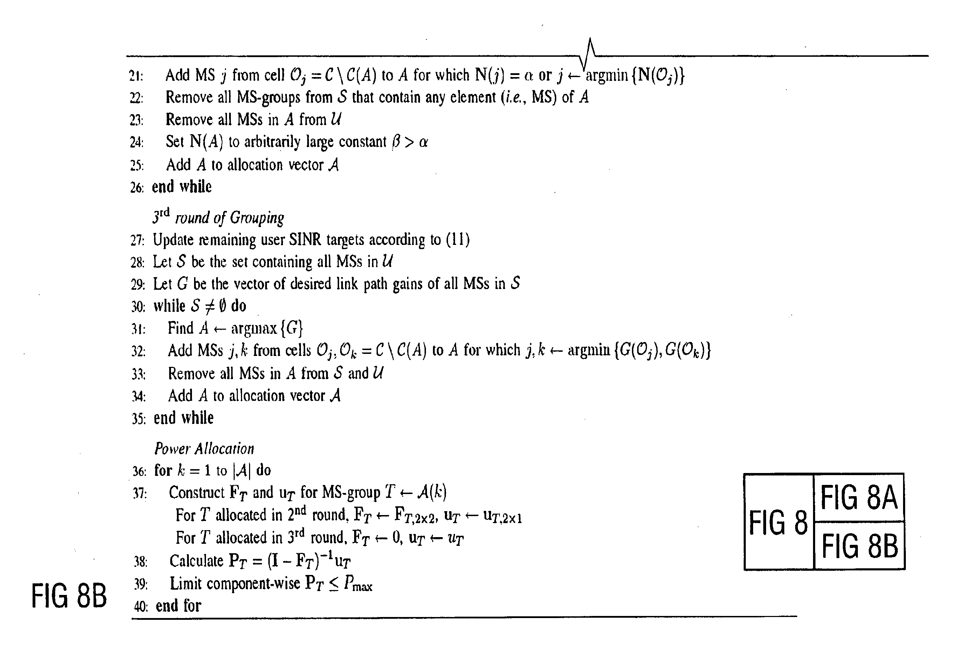

The goal of the scheduler is to maximize the "MS-groups"' for which the feasible condition in (7) is satisfied, and the Pareto optimal power control can be applied. This is opposed to a random scheduler in which the assignment of RBs, and hence also the MS-groups, is performed in an arbitrary fashion. An embodiments of the POS algorithm is shown in Fig. 8 and will now be described.

The scheduling algorithm is split into three allocation stages, corresponding to the number of cells considered (in this embodiment three) and hence the number of stepwise removals (plus 1) that are possible.

In the first round of grouping, the scheduler searches through all combinations of three MSs (*i.e.,* one in each cell), and adds each group to the set of candidates S that fulfils the feasibility condition (7). Since it is possible for certain MSs to be part of multiple feasible groups, and some MSs to not be part of any, to maximize the number of feasible combinations, those MSs with the fewest feasible combinations will be scheduled first, before scheduling other groups and removing the possible partners. Hence, the MSs with the least feasible groups is scheduled first along with the two feasible partners that have the least feasible groups, and so on until all MSs in S have been scheduled/grouped. This completes the first round of grouping.

In the second round, the MSs that have not been scheduled yet, *i.e.,* those that did not make up any feasible combination in the first round grouping, are to be assigned. Because it is not possible to schedule any of these users in groups of 3 (as otherwise they would have been already scheduled in the first round), in this round groups will be allocated with one link deactivated. Furthermore, as in the stepwise removal algorithm described above the SINR targets are increased according to Eq. (8) to maintain the system spectral efficiency. Thus, similar as in the first round, the set S now denotes all "MS-pairs" that satisfy Eq. (16), and are hence feasible for allocation. Again, the MS(s) with the fewest number of feasible combinations are scheduled first, and to complete each group a MS is selected from the unscheduled cell that has either no feasible combinations, or at least the fewest of those in that cell remaining to be scheduled. This is done until all MSs in D have been scheduled, completing the second round of grouping.

Finally, in the third round of grouping, where MS-groups with two deactivated links are scheduled, the scheduling becomes rather simple. The basic premise is that the activated link in each group should have the best path gain, so as to minimize its transmit power, and hence that of the group. Therefore, each of the remaining groups is constructed using the MS with the best path gain, and the MS in each of the two remaining cells with the worst path loss, until all MSs have been scheduled. The SINR target is also updated, such that the system spectral efficiency can be maintained.

In the power allocation stage, **F** and **u** are constructed for each MS-group (these are of course sized accordingly for those groups allocated in the second or third round of grouping) and the Pareto optimal power allocation is calculated and assigned. The power of each MS is limited by the system's given maximum transmit power, which may reduce the optimality of some solutions, however is unavoidable. Through this scheduler, the system will attain the desired spectral efficiency, and if not, minimize the losses incurred.

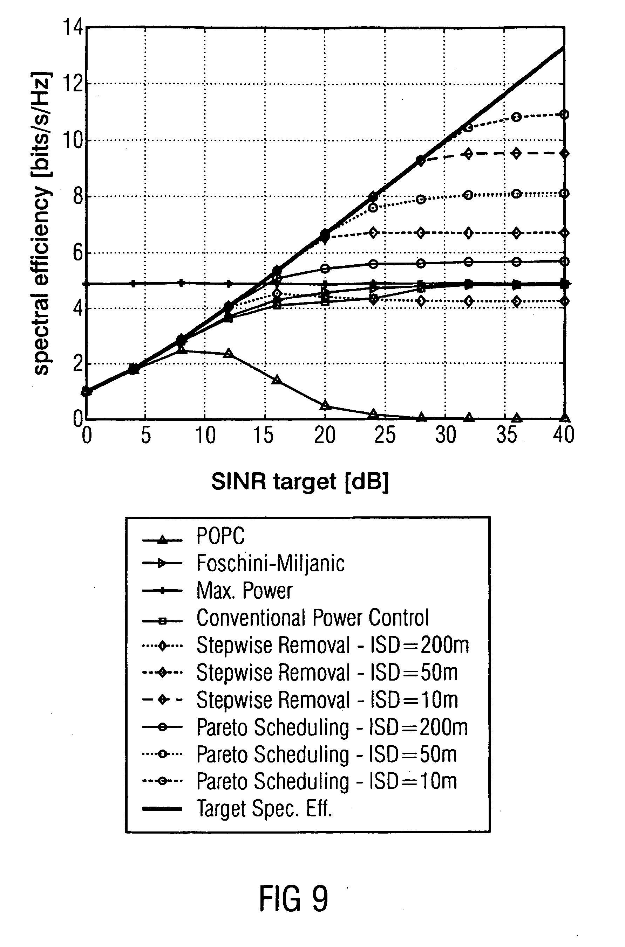

Fig. 9 shows the spectral efficiency results for the various power allocation techniques (random scheduling is used for all the power allocation techniques except POS) for varying SINR targets and inter-site distances (ISDs). As can be seen, POPC, the Foschini-Miljanic algorithm, open-loop power control and maximum power systems are constant for the various ISDs. The maximum power performance is constant over all SINR targets, and since the Foschini-Miljanic algorithm converges to this when the groupings are infeasible, it is clear why its performance is bounded. The Pareto optimal allocation suffers significantly from the random grouping, as the number of feasible groups disappears very rapidly with increasing SINR. Furthermore, the upper bound in Fig. 9 simply denotes the Shannon capacity of the given SINR target, *i.e.*, the attainable spectral efficiency if all MSs can be optimally scheduled.

The ISD is however a significant factor in the performance of the SR algorithm and POS as described in the embodiments above. The smaller the ISDs in the network, the better the performance of the power allocation strategies. When links are deactivated and, consequently, the SINR targets are increased to prevent loss of system spectral efficiency, the larger transmit powers needed to satisfy the $\bar{\gamma}_{up}^*$ are bound by $P_{max}$. Reducing the ISDs is equivalent to increasing $P_{max}$ due to the greater desired link gains. Hence, POS and the SR algorithm will achieve the spectral efficiency target for much higher SINRs as the MS-groups with only two or one link(s) active are not bound by $P_{max}$. The differences that can be seen between POS and the SR algorithm represent the direct gains received through the grouping procedure in the Pareto scheduler. It is evident that gains over 1 bits/s/Hz are possible for varying ISDs. In general, it is evident that POS outperforms all other techniques for the scenarios (ISDs) investigated.

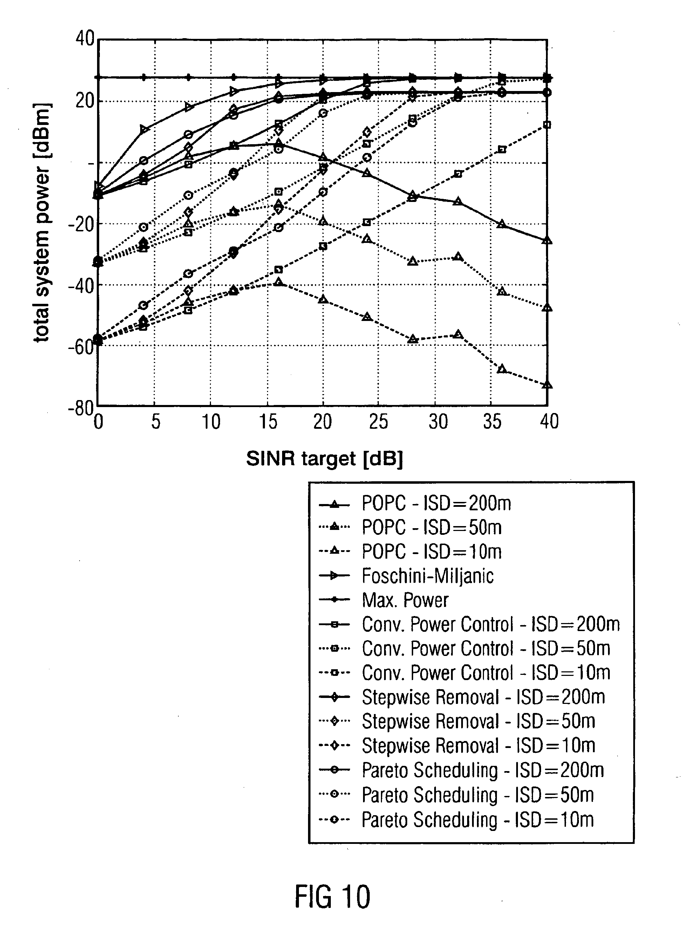

Fig. 10 shows a graph of the system power usage results for the various power control techniques. Fig. 10 shows the total system power usage. While POPC uses almost no power due to its low availability, the Foschini-Miljanic algorithm convergences to maximum power transmission. The system powers of POS and the SR algorithm are much lower than the other techniques (except for conventional power control, which however does not achieve the spectral efficiency target of the system). The reduction in transmit power for smaller ISDs is explained by the reduction in the desired link gains. For each ISD the lower SINRs POS requires slightly more power than the SR algorithm, mainly because more users are being scheduled. This is, however, inverted after $\gamma^* = 12dB$, as here the (most likely) single remaining link per group requires more power in the SR algorithm than the two or three links scheduled in POS. In the end, however, both converge to (for all ISDs) $P_{max}/3$. From Figs. 9 and 10 it is clear that POS delivers close to optimal performance in terms of spectral efficiency, and performs very well in terms of power usage over a wide range of SINR targets.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods when the computer program product runs on a computer. The program code may for example be stored on a machine readable carrier. Other embodiments comprise the computer program for performing one of the methods described herein, stored on a machine readable carrier. In other words, an embodiment of the inventive method is, therefore, a computer program having a program code for performing one of the methods described herein, when the computer program runs on a computer. A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein. A further embodiment comprises a computer having installed thereon the computer program for performing one of the methods described herein. In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

**Claims**

1. A method for scheduling users ($MS_1$-$MS_5$) in a cellular environment such that a Pareto optimal power control can be applied, wherein in each cell ($C_1$-$C_3$) of the cellular environment there are a plurality of users ($MS_1$-$MS_5$), the method comprising:

   scheduling users ($MS_1$-$MS_5$) such that a number of groups of interfering users from different cells ($C_1$-$C_3$) which fulfill a feasibility condition for the Pareto optimal power control is maximized, wherein scheduling comprises:

   searching all combinations of users ($MS_1$-$MS_5$), each combination including one user ($MS_1$-$MS_5$) in a neighboring cell ($C_1$-$C_3$);
   adding to a set of candidates each combination which fulfills the feasibility condition; and
   allocating the users ($MS_1$-$MS_5$) until all users in the set of candidates have been allocated, wherein allocating starts with users being part in the fewest combinations, and

   wherein for a three cell scenario the feasibility condition is as follows:

$$F_{12}F_{21} + F_{13}F_{31} + F_{23}F_{32} + F_{12}F_{23}F_{31} + F_{13}F_{21}F_{32} < 1$$

   where

$$F_{ij} = \frac{\gamma_i^* G_{j,v_i}}{G_{i,v_i}}$$ are the elements of the interference matrix **F**,

   $\gamma_i^*$ is the target SINR of user $i$, and
   $G_{j,v_i}$ is the path gain between user $j$ and the BS $v_i$ of MS $i$.

2. The method of claim 1, wherein scheduling the users ($MS_1$-$MS_5$) is repeated until all users in the set of candidates have been scheduled.

3. The method of claim 1 or 2, wherein, in case there are users ($MS_1$-$MS_5$) which are not part of any combination fulfilling the feasibility condition, scheduling further comprises:

   deactivating for each user one link;
   adapting a SINR target for each user to maintain system spectral efficiency;
   adding each combination of users which fulfills a modified feasibility condition to a further set of candidates; and
   allocating the users until all users in the further set of candidates have been allocated, wherein the allocation starts with a user being part in the fewest combinations.

4. The method of claim 3, wherein the steps of deactivating, adapting, adding and allocating are repeated for users not part of any combination fulfilling the modified feasibility condition until all links to users in neighboring cells have been deactivated.

5. The method of one of claims 1 to 4, further comprising:

   in case of one or more users ($MS_1$-$MS_5$) in a cell ($C_1$-$C_3$) that cannot form a combination fulfilling the feasibility

**EP 2 536 223 B1**

condition, switching off the links to users in neighboring cells (C₁-C₃).

6. The method of claim 5, wherein the links are switched off over a plurality of consecutive time slots, wherein the SINR target of the remaining links is changed for maintaining the system spectral efficiency.

7. The method of claim 6, wherein the SINR target of the remaining links is changed as follows:

$$\gamma^{\bullet}_{(1),\text{up}} = \frac{\prod_{j}^{K}\left(1+\gamma^{\bullet}_{j}\right)}{1+\gamma^{\bullet}_{(2),\text{up}}} - 1,$$

where $\gamma^{\bullet}_{(i),\text{up}}$ represents the updated SINR target of the $i^{th}$ remaining link.

8. The method of claim 7, further comprising:

grouping three cells with coinciding beam patterns to form a cluster substantially shielded from neighboring sectors' interference;
applying the scheduling to these three cells; and
tessellating the clusters over the cell environment, thereby applying the scheduling separately to each cluster.

9. The method of one of claims 1 to 8, comprising for each combination fulfilling the feasibility condition:

calculating the Pareto optimal power allocation and assigning it to the users.

10. A computer program product comprising instructions to perform a method of one of claims 1 to 9 when executing the instructions on a computer.

11. A scheduler for a wireless network having a plurality of cells (C₁-C₃), each including a plurality of users (MS₁-MS₅), the scheduler being configured to schedule the users (MS₁-MS₅) in accordance with one of claims 1 to 9.

12. A wireless network comprising a plurality of cells (C₁-C₃), each including a plurality of users, and a scheduler of claim 11.

**Patentansprüche**

1. Ein Verfahren zum Planen von Benutzern (MS₁ - MS₅) in einer Zellularumgebung, derart, dass eine Pareto-optimale Leistungssteuerung angewendet werden kann, wobei es in jeder Zelle (C₁ - C₃) der Zellularumgebung eine Mehrzahl von Benutzern (MS₁ - MS₅) gibt, wobei das Verfahren folgenden Schritt aufweist:

Planen von Benutzern (MS₁ - MS₅), derart, dass eine Anzahl von Gruppen interferierender Benutzer aus unterschiedlichen Zellen (C₁ - C₃), die eine Machbarkeitsbedingung für die Pareto-optimale Leistungssteuerung erfüllen, maximiert ist,
wobei das Planen folgende Schritte aufweist:

Suchen aller Kombinationen von Benutzern (MS₁ - MS₅), wobei jede Kombination einen Benutzer (MS₁ - MS₅) in einer benachbarten Zelle (C₁ - C₃) umfasst;
Hinzufügen jeder Kombination, die die Machbarkeitsbedingung erfüllt, zu einem Satz von Anwärtern; und
Zuteilen der Benutzer (MS₁ - MS₅), bis alle Benutzer in dem Satz von Anwärtern zugeteilt wurden, wobei das Zuteilen mit Benutzern beginnt, die Teil der wenigsten Kombinationen sind, und

wobei für ein Szenario mit drei Zellen die Machbarkeitsbedingung wie folgt ist:

14

$$F_{12}F_{21}+F_{13}F_{31}+F_{23}F_{32}+F_{12}F_{23}F_{31}+F_{13}F_{21}F_{32}<1$$

wobei Folgendes gilt:

$$F_{ij} = \frac{\gamma_i^* G_{j,v_i}}{G_{i,v_i}}$$ sind die Elemente der Interferenzmatrix **F**,

$\gamma_i^*$ ist das Ziel-SINR eines Benutzer *i*, und

$G_{j,v_i}$ ist der Weggewinn zwischen einem Benutzer *j* und der BS $v_i$ von MS *i*.

**2.** Das Verfahren gemäß Anspruch 1, bei dem das Planen der Benutzer ($MS_1$ - $MS_5$) wiederholt wird, bis alle Benutzer in dem Satz von Anwärtern geplant wurden.

**3.** Das Verfahren gemäß Anspruch 1 oder 2, bei dem, in dem Fall, dass es Benutzer ($MS_1$ - $MS_5$) gibt, die nicht Teil einer beliebigen Kombination sind, die die Machbarkeitsbedingung erfüllt, das Planen ferner folgende Schritte aufweist:

Deaktivieren einer Verbindung für jeden Benutzer;
Anpassen eines SINR-Ziels für jeden Benutzer, um eine System-Spektraleffizienz aufrechtzuerhalten;
Hinzufügen jeder Kombination von Benutzern, die eine modifizierte Machbarkeitsbedingung erfüllt, zu einem weiteren Satz von Anwärtern; und
Zuteilen der Benutzer, bis alle Benutzer in dem weiteren Satz von Anwärtern zugeteilt wurden, wobei die Zuteilung mit einem Benutzer beginnt, der Teil der wenigsten Kombinationen ist.

**4.** Das Verfahren gemäß Anspruch 3, bei dem die Schritte des Deaktivierens, Anpassens, Hinzufügens und Zuteilens für Benutzer, die nicht Teil einer beliebigen Kombination sind, die die modifizierte Machbarkeitsbedingung erfüllt, wiederholt werden, bis alle Verbindungen zu Benutzern in benachbarten Zellen deaktiviert wurden.

**5.** Das Verfahren gemäß einem der Ansprüche 1 bis 4, das ferner folgenden Schritt aufweist:

in dem Fall eines oder mehrerer Benutzer ($MS_1$ - $MS_5$) in einer Zelle ($C_1$ - $C_3$), die keine Kombination bilden können, die die Machbarkeitsbedingung erfüllt, Abschalten der Verbindungen zu Benutzern in benachbarten Zellen ($C_1$ - $C_3$).

**6.** Das Verfahren gemäß Anspruch 5, bei dem die Verbindungen über eine Mehrzahl aufeinander folgender Zeitschlitze abgeschaltet werden, wobei das SINR-Ziel der verbleibenden Verbindungen für ein Aufrechterhalten der System-Spektraleffizienz verändert wird.

**7.** Das Verfahren gemäß Anspruch 6, bei dem das SINR-Ziel der verbleibenden Verbindungen wie folgt verändert wird:

$$\gamma_{(1),up}^* = \frac{\prod_{j}^{K}\left(1+\gamma_j^*\right)}{1+\gamma_{(2),up}^*} - 1,$$

wobei $\gamma_{(i),up}^*$ das aktualisierte SINR-Ziel der i-ten verbleibenden Verbindung darstellt.

**8.** Das Verfahren gemäß Anspruch 7, das ferner folgende Schritte aufweist:

Gruppieren dreier Zellen mit übereinstimmenden Strahlmustern, um ein Cluster zu bilden, das im Wesentlichen vor einer Interferenz durch benachbarte Sektoren abgeschirmt ist;
Anwenden der Planung auf diese drei Zellen; und

Tessellieren der Cluster über die Zellumgebung, wodurch die Planung separat auf jedes Cluster angewendet wird.

**9.** Das Verfahren gemäß einem der Ansprüche 1 bis 8, das für jede Kombination, die die Machbarkeitsbedingung erfüllt, folgende Schritte aufweist:

Berechnen der Pareto-optimalen Leistungszuteilung und Zuweisen derselben zu den Benutzern.

**10.** Ein Computerprogrammprodukt mit Befehlen zur Durchführung eines Verfahrens gemäß einem der Ansprüche 1 bis 9, wenn dasselbe die Befehle auf einem Computer ausführt.

**11.** Ein Planer für ein drahtloses Netz mit einer Mehrzahl von Zellen ($C_1$ - $C_3$), die jeweils eine Mehrzahl von Benutzern ($MS_1$ - $MS_5$) beinhalten, wobei der Planer ausgebildet ist, um die Benutzer ($MS_1$ - $MS_5$) gemäß einem der Ansprüche 1 bis 9 zu planen.

**12.** Ein drahtloses Netz mit einer Mehrzahl von Zellen ($C_1$ - $C_3$), die jeweils eine Mehrzahl von Benutzern beinhalten, und einem Planer gemäß Anspruch 11.


**Revendications**

**1.** Procédé de programmation d'utilisateurs ($MS_1$ à $MS_5$) dans un environnement cellulaire de sorte que puisse être appliqué un contrôle de puissance optimum de Pareto, dans lequel existe, dans chaque cellule ($C_1$ à $C_3$) de l'environnement cellulaire, une pluralité d'utilisateurs ($MS_1$ à $MS_5$), le procédé comprenant le fait de:

programmer les utilisateurs ($MS_1$ à $MS_5$) de sorte que soit maximisé un nombre de groupes d'utilisateurs interférents de différentes cellules ($C_1$ à $C_3$) qui remplissent une condition de faisabilité pour le contrôle de puissance optimum de Pareto,
dans lequel la programmation comprend le fait de:

chercher toutes les combinaisons d'utilisateurs ($MS_1$ à $MS_5$), chaque combinaison comportant un utilisateur ($MS_1$ à $MS_5$) dans une cellule voisine ($C_1$ à $C_3$) ;
ajouter à un ensemble de candidats chaque combinaison qui remplit la condition de faisabilité; et
attribuer les utilisateurs ($MS_1$ à $MS_5$) jusqu'à ce que tous les utilisateurs dans l'ensemble de candidats aient été attribués, où l'attribution commence par les utilisateurs faisant partie des combinaisons les plus petites, et

dans lequel, pour un scénario de trois cellules, la condition de faisabilité est la suivante:

$$F_{12}F_{21} + F_{13}F_{31} + F_{23}F_{32} + F_{12}F_{23}F_{31} + F_{13}F_{21}F_{32} < 1$$

où

$F_{ij} = \dfrac{y_i^* G_{j,v_i}}{G_{i,v_i}}$ sont les éléments de la matrice d'interférence F,

$y_i^*$ est le SINR cible de l'utilisateur $i$, et
$G_{j,vi}$ est le gain de trajet entre l'utilisateur $j$ et le BS $v_i$ de MS $i$.

**2.** Procédé selon la revendication 1, dans lequel la programmation des utilisateurs ($MS_1$ à $MS_5$) est répétée jusqu'à ce que tous les utilisateurs dans l'ensemble de candidats aient été programmés.

**3.** Procédé selon la revendication 1 ou 2, dans lequel, au cas où il existe des utilisateurs ($MS_1$ à $MS_5$) qui ne font pas partie de l'une ou l'autre combinaison remplissant la condition de faisabilité, la programmation comprend par ailleurs le fait de:

désactiver un lien pour chaque utilisateur;
adapter une cible de SINR pour chaque utilisateur, pour maintenir l'efficacité spectrale du système;
ajouter chaque combinaison d'utilisateurs qui remplit une condition de faisabilité modifiée à un autre ensemble de candidats; et
attribuer les utilisateurs jusqu'à ce que tous les utilisateurs dans l'autre ensemble de candidats aient été attribués, où l'attribution commence par un utilisateur faisant partie des combinaisons les plus petites.

4.  Procédé selon la revendication 3, dans lequel les étapes de désactivation, d'adaptation, d'addition et d'attribution sont répétées pour les utilisateurs qui ne font pas partie de l'une ou l'autre combinaison remplissant la condition de faisabilité modifiée, jusqu'à ce que tous les liens vers les utilisateurs dans les cellules voisines aient été désactivés.

5.  Procédé selon l'une des revendications 1 à 4, comprenant par ailleurs le fait de:

    dans le cas d'un ou plusieurs utilisateurs ($MS_1$ à $MS_5$) dans une cellule ($C_1$ à $C_3$) qui ne peuvent pas former de combinaison remplissant la condition de faisabilité, désactiver les liens vers les utilisateurs dans les cellules voisines ($C_1$ à $C_3$).

6.  Procédé selon la revendication 5, dans lequel les liens sont désactivés sur une pluralité d'intervalles de temps successifs, dans lequel la cible de SINR des liens restants est modifiée pour maintenir l'efficacité spectrale du système.

7.  Procédé selon la revendication 6, dans lequel la cible de SINR des liens restants est modifiée comme suit:

$$y_{(1),up}^* = \frac{\prod_{j}^{K}\left(1+y_j^*\right)}{1+y_{(2),up}^*} - 1,$$

où $y_{(i),up}^*$ représente la cible de SINR mise à jour du i-ème lien restant.

8.  Procédé selon la revendication 7, comprenant par ailleurs le fait de:

    regrouper trois cellules à modèles de faisceau coïncidents, pour former un groupe substantiellement protégé contre l'interférence de secteurs voisins;
    appliquer la programmation à ces trois cellules; et
    paver les groupes sur l'environnement de la cellule, appliquant ainsi la programmation séparément à chaque groupe.

9.  Procédé selon l'une des revendications 1 à 8, comprenant, pour chaque combinaison remplissant la condition de faisabilité, le fait de:

    calculer l'attribution de puissance optimale de Pareto et l'attribuer aux utilisateurs.

10. Programme d'ordinateur comprenant des instructions pour réaliser un procédé selon l'une des revendications 1 à 9 lors de l'exécution des instructions sur un ordinateur.

11. Programmateur pour un réseau sans fil présentant une pluralité de cellules ($C_1$ à $C_3$) comportant, chacune, une pluralité d'utilisateurs ($MS_1$ à $MS_5$), le programmateur étant configuré pour programmer les utilisateurs ($MS_1$ à $MS_5$) selon l'une des revendications 1 à 9.

12. Réseau sans fil comprenant une pluralité de cellules ($C_1$ à $C_3$) comportant, chacune, une pluralité d'utilisateurs, et un programmateur selon la revendication 11.

FIG 1

FIG 2A

FIG 2B

FIG 2C

EP 2 536 223 B1

FIG 3A

FIG 3B

FIG 4

FIG 5

FIG 6

FIG 7

**Algorithm 1** Pareto Optimal Scheduler

1: Let $\mathcal{U}$ be the set of all unscheduled users

2: Let $C$ be the set of all cells

$1^{st}$ *round of Grouping*

3: Let $S$ be the set containing all MS-groups in $\mathcal{U}$ for which (7) is satisfied

4: Let N be the vector containing the number of occurrences of each MS in $S$
Set zero entries of N to arbitrarily large constant $\alpha > \max\{N\}$

5: **while** $S \neq \emptyset$ **do**

6:     Find $i \xleftarrow{r} \operatorname{argmin}\{N\}$

7:     Find set $\mathcal{D}$ containing all MS-groups in $S$ of which MS $i$ is a member

8:     Find MS-group $A$ in $\mathcal{D}$ s.t. $A \leftarrow \operatorname{argmin}_A \{N(A)\}$

9:     Remove all MS-groups from $S$ that contain any element (*i.e.*, MS) of $A$

10:     Remove all MSs in $A$ from $\mathcal{U}$

11:     Set $N(A)$ to arbitrarily large constant $\beta > \alpha$

12:     Add $A$ to allocation vector $\mathcal{A}$

13: **end while**

$2^{nd}$ *round of Grouping*

14: Update remaining user SINR targets according to (8)

15: Let $S$ be the set containing all MS-pairs in $\mathcal{U}$ for which (16) is satisfied

16: Let N be the vector containing the number of occurrences of each MS in $S$
Set zero entries of N to $\alpha$

17: **while** $S \neq \emptyset$ **do**

18:     Find $i \leftarrow \operatorname{argmin}\{N\}$

19:     Find set $\mathcal{D}$ containing all MS-pairs in $S$ of which MS $i$ is a member

20:     Find MS-pair $A$ in $\mathcal{D}$ s.t. $A \leftarrow \operatorname{argmin}_A \{N(A)\}$

FIG 8A

| FIG 8 | FIG 8A |
|-------|--------|
|       | FIG 8B |

21: Add MS $j$ from cell $\mathcal{O}_j = C \setminus C(A)$ to $A$ for which $N(j) = \alpha$ or $j \leftarrow \arg\min\{N(\mathcal{O}_j)\}$

22: Remove all MS-groups from $S$ that contain any element (*i.e.*, MS) of $A$

23: Remove all MSs in $A$ from $\mathcal{U}$

24: Set $N(A)$ to arbitrarily large constant $\beta > \alpha$

25: Add $A$ to allocation vector $\mathcal{A}$

26: **end while**

*3rd round of Grouping*

27: Update remaining user SINR targets according to (11)

28: Let $S$ be the set containing all MSs in $\mathcal{U}$

29: Let $G$ be the vector of desired link path gains of all MSs in $S$

30: **while** $S \neq \emptyset$ **do**

31: Find $A \leftarrow \arg\max\{G\}$

32: Add MSs $j, k$ from cells $\mathcal{O}_j, \mathcal{O}_k = C \setminus C(A)$ to $A$ for which $j, k \leftarrow \arg\min\{G(\mathcal{O}_j), G(\mathcal{O}_k)\}$

33: Remove all MSs in $A$ from $S$ and $\mathcal{U}$

34: Add $A$ to allocation vector $\mathcal{A}$

35: **end while**

*Power Allocation*

36: **for** $k = 1$ to $|\mathcal{A}|$ **do**

37: Construct $\mathbf{F}_T$ and $\mathbf{u}_T$ for MS-group $T \leftarrow \mathcal{A}(k)$

For $T$ allocated in 2nd round, $\mathbf{F}_T \leftarrow \mathbf{F}_{T,2\times2}$, $\mathbf{u}_T \leftarrow \mathbf{u}_{T,2\times1}$

For $T$ allocated in 3rd round, $\mathbf{F}_T \leftarrow 0$, $\mathbf{u}_T \leftarrow u_T$

38: Calculate $\mathbf{P}_T = (\mathbf{I} - \mathbf{F}_T)^{-1}\mathbf{u}_T$

39: Limit component-wise $\mathbf{P}_T \leq P_{\max}$

40: **end for**

**FIG 8B**

FIG 8 | FIG 8A / FIG 8B

FIG 9

FIG 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **T. ELBATT ; A. EPH-REMIDES.** Joint Scheduling and Power Control for Wireless ad hoc Networks. *IEEE Transactions on Wireless Communications,* 2004, vol. 3 (1), 74-85
- **X. WANG ; G. B. GIANNAKIS ; Y. YU.** Channel-Adaptive Optimal OFDMA Scheduling. *Proc. of 41st Annual Conference on Information Sciences and Systems CISS, Baltimore, MD, USA,* March 2007, 536-541
- **D. KIVANC ; G. LI ; H. LIU.** Computationally Efficient Bandwidth Allocation and Power Control for OFDMA. *IEEE Transactions on Wireless Communications,* 2003, vol. 2 (6), 1150-1158
- **H. KIM ; K. KIM ; Y. HAN ; S. YUN.** A Proportional Fair Scheduling for Multicarrier Transmission Systems. *Proc. of 60th Vehicular Technology Conference, VTC,* September 2004, vol. 1, 409-413
- **R. KWAN ; C. LEUNG ; J. ZHANG.** Proportional fair multiuser scheduling in LTE. *IEEE Signal Processing Letters,* June 2009, vol. 16 (6), 461-464
- **M. KHEDR ; I. EL-RUBE ; Y. HANAFY ; H. ABOU-ZEID.** ubcarrier opportunistic proportional fair scheduling for OFDMA systems. *Proc. of 4th International Conference on Internet ICI, Tashkent,* September 2008, 1-5
- **A. RAO.** Reverse Link Power Control for Managing Inter-Cell Interference in Orthogonal Multiple Access Systems. *Proc of. Vehicular Technology Conference (VTC),* October 2007, 1837-1841
- **Z. LI ; Y. WANG ; D. YANG.** A Novel Power Control Scheme in OFDMA Uplink. *Proc. of International Conference on Signal Processing (ICSP),* 2008, 2880-2883
- **L. K. TEE ; C. VAN RENSBURG ; J.-A. TSAI.** Uplink Power Control for an OFDMA Mobile Cellular System. *Proc. of the Vehicular Technology Conference, Baltimore, MD,* September 2007
- **KOLYUZHNOV, D. et al.** Power Controlled Random Access in Multi-Cell OFDMA Uplink. *Vehicular Technology Conference, 2008. VTC 2008-Fall. IEEE 68,* 21 September 2008, 1-5
- **A. GOLDSMITH.** Wireless Communications. University Press, 2005
- **G. J. FOSCHINI ; Z. MILJANIC.** A Simple Distributed Autonomous Power Control Algorithm and Its Convergence. *IEEE Transactions on Vehicular Technology,* November 1993, vol. 42 (4), 641-646
- **E. JURY.** A simplified stability criterion for linear discrete systems. *Proceedings of the IRE,* 1962, vol. 50 (6), 1493-1500
- **G. FOSHINI ; Z. MILJANIC.** A Simple Distributed Autonomous Power Control Algorithm and Its Convergence. *IEEE Transactions on Vehicular Technology,* November 1993, vol. 42 (4), 641-646